# EUROPEAN PATENT SPECIFICATION

(11) **EP 2 732 935 B1**
(45) Date of publication and mention of the grant of the patent: **25.10.2017**
(21) Application number: 12814854.1
(22) Date of filing: 04.07.2012
(51) Int. Cl.: B25J 9/16, B63B 59/08, B25J 13/08, G05D 1/02, B63B 59/10

(54) **METHOD FOR CHECKING A TRAVELABLE AREA OF A PLANE OF TRAVEL FOR A ROBOT, ROBOT AND RECORDING MEDIUM**
VERFAHREN ZUM ÜBERPRÜFEN EINES BEFAHRBAREN BEREICHS EINER BEWEGUNGSEBENE FÜR EINEN ROBOTER, ROBOTER UND AUFZEICHNUNGSMEDIUM
PROCÉDÉ DE VÉRIFICATION D'UNE ZONE POUVANT ÊTRE PARCOURUE D'UN PLAN DE PARCOURS DESTINÉ À UN ROBOT, ROBOT ET SUPPORT D'ENREGISTREMENT

(30) Priority: 15.07.2011 KR 20110070586
(43) Date of publication of application: 21.05.2014
(73) Proprietor: Samsung Heavy Ind. Co., Ltd., Seoul 135-280 (KR)
(72) Inventor: PARK, Jinhyung, Daejeon 305-793 (KR); LEE, Jaeyong, Daejeon 305-762 (KR); RHEE, Siyoul, Daejeon 302-859 (KR); KIM, Byungchul, Seoul 121-768 (KR)
(74) Representative: Lavoix
(86) International application number: PCT/KR2012/005307
(87) International publication number: WO 2013/012189

(56) References cited:
- JP-A- H07 302 110
- JP-A- 2009 229 394
- KR-A- 20110 063 346
- KR-B1- 100 752 782
- KR-B1- 100 843 085
- US-A- 5 947 051
- US-A1- 2010 126 403

## Description

### [Technical Field]

The present invention relates to a method for checking a moving available area of a robot on a moving surface, a robot, and a recording medium.

### [Background Art]

Document JP 2009 229394 A relates to an apparatus and method for determining the traveling area of a mobile robot.

When a robot moves on a hull surface of a ship in order to inspect or clean the hull surface, there may be various problems caused by moving the robot without recognizing shape characteristics of a moving surface. For example, while the robot moves, the robot may collide with a certain portion on the moving surface to damage the moving surface, and the robot may be detached from the moving surface by being separated from a sharp curved portion. Further, in some cases, the robot may be stuck in a depression on the moving surface and may not be escaped from the depression.

In order to solve the problems, in the past, an operator moves the robot while checking a shape of the moving surface by using a camera or checking obstacles by using sensor information. In such a method, the operator needs to continuously observe the movement of the robot while the robot moves.

Furthermore, in order for the robot to intentionally move on the moving surface through autonomous moving, it is required to previously check an area where the robot can move. As the most general method, there is a method in which the robot is not allowed to move at a portion of large curvature by analyzing curvature by using a geometric model of the moving surface.

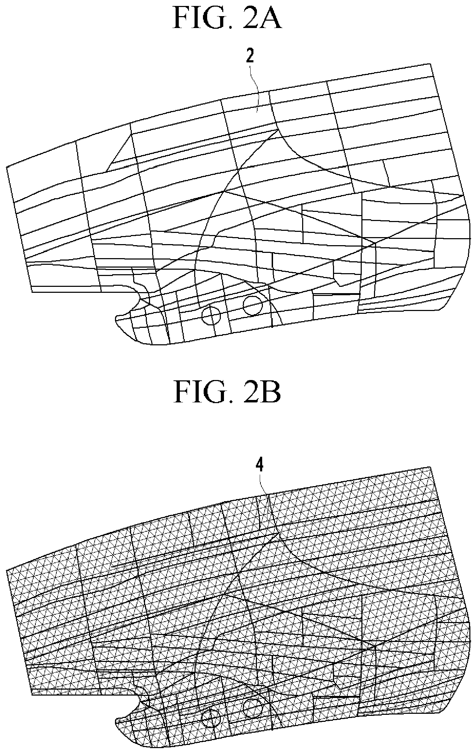

However, since the moving surface, for example, the geometric model of the hull surface includes a plurality of trimmed surfaces as illustrated in FIG. 2A, even though it is required to ensure the curvature continuity (C2 continuity) between curved surfaces in order to analyze the curvature, it is difficult for most design shapes to ensure the curvature continuity, and the C2 continuity is broken when loading the design shape in order to process the design shape. Moreover, since a value of the curvature for one point on the curved surface varies depending on a direction, the curvature is not appropriate to be used as a criterion for determining a moving available area.

In addition, since only the curvature is taken account of without taking account of a size of the robot, when the robot actually moves, the robot may not move at a portion of less curvature in some cases.

The above information disclosed in this Background section is only for enhancement of understanding of the background of the invention and therefore it may contain information that does not form the prior art that is already known in this country to a person of ordinary skill in the art.

### [DISCLOSURE]

### [Technical Problem]

The present invention has been made in an effort to provide a method for checking a moving available area of a robot on a moving surface, a robot, and a recording medium.

### [Technical Solution]

An exemplary embodiment of the present invention provides a method for checking a moving available area of a robot on a moving surface in order to allow the robot to autonomously move on the moving surface of a curved surface. The method includes a) generating a geometric model of the moving surface divided into a plurality of curved surfaces, b) dividing the plurality of curved surfaces into a plurality of triangles by using the geometric model, c) calculating angles between the plurality of triangles and triangles adjacent to the plurality of triangles, and d) determining whether or not the angles are within a predetermined range.

In this case, in step b), each of the plurality of triangles may be substantially a flat surface.

In this case, in step b), the one curved surface may be divided into a plurality of triangles such that triangles adjacent to each other within the one curved surface share an edge and a vertex.

In this case, in step c), angles between the adjacent triangles that share the edge or the vertex may be calculated.

In this case, in step c), when angles between triangles, which are positioned at a boundary between two curved surfaces adjacent to each other and are respectively positioned on the two adjacent curved surfaces, are calculated, angles between triangles whose edge and edge, edge and vertex, or vertex and vertex meet each other may be calculated.

In this case, after step d), the method may further include e) checking primary moving available areas by defining the triangles as the moving available areas the when the angles are within the predetermined range.

In this case, in step c), the angles may be calculated using angles between normal vectors of the adjacent triangles.

In this case, after step e), the method may further include checking a secondary moving available area by setting the robot to have a predetermined size, moving the robot in the moving available areas, and then by defining an area where the robot does not intersect with the moving surface as a moving available area.

Another exemplary embodiment of the present invention provides a robot that stores a program for executing the method for checking a moving available area of a robot on a moving surface or moves on a moving surface by being controlled by an external device that stores the program.

Yet another exemplary embodiment of the present invention provides a computer-readable recording medium that stores a program for executing the method for checking a moving available area of a robot on a moving surface.

### [Advantageous Effects]

According to an exemplary embodiment of the present invention, it is possible to easily check a moving available area of a robot on a moving surface.

### [Description of the Drawings]

FIG. 1 is a flowchart of a method for checking a moving available area of a robot on a moving surface according to an exemplary embodiment of the present invention.
FIG. 2A is a diagram illustrating a geometric model formed on a partial surface of a ship hull.
FIG. 2B is a diagram illustrating triangle meshes generated by triangulating the geometric model illustrated in FIG. 2A.
FIG. 3A is an enlarged view illustrating an edge at a boundary between curved surfaces in the geometric model illustrated in FIG. 2A.
FIG. 3B is a diagram illustrating a state where the triangle meshes are formed by triangulating the curved surface illustrated in FIG. 3A.
FIG. 4 is a diagram for describing a method for measuring angles between adjacent triangle meshes when the triangle meshes are formed.
FIG. 5 is a diagram illustrating triangles within the triangle mesh.
FIG. 6 is a diagram illustrating triangles at the boundary between the triangle meshes.

### [Mode for Invention]

Hereinafter, exemplary embodiments of the present invention will be described in detail with reference to the accompanying drawings so that the exemplary embodiments of the present invention can be easily realized by those skilled in the art to which the present invention pertains. As those skilled in the art would realize, the described embodiments may be modified in various different ways, all without departing from the spirit or scope of the present invention. The drawings and description are to be regarded as illustrative in nature and not restrictive. Like reference numerals designate like elements throughout the specification.

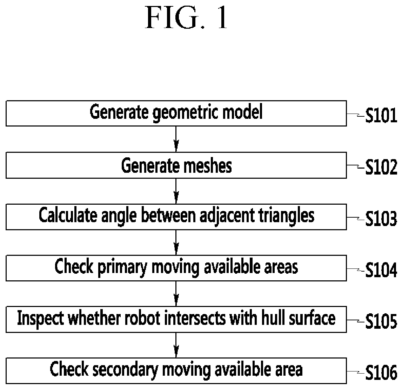

FIG. 1 is a flowchart of a method for checking a moving available area of a robot on a moving surface according to an exemplary embodiment of the present invention.

Referring to FIG. 1, the method for checking a moving available area of a robot on a moving surface according to the exemplary embodiment of the present invention may include step S101 of generating a geometric model, step S102 of generating meshes, step S103 of calculating angles between adjacent triangles, step S104 of checking a primary moving available area, step S105 of inspecting whether or not a robot intersects with a moving surface, and step S106 of checking a secondary moving available area.

In the method for checking a moving available area of a robot on a moving surface according to the exemplary embodiment of the present invention, a geometric model for hull curved surfaces is first generated using a program such as 3D CAD. (S101) FIG. 2A illustrates a geometric model 2 for partial hull curved surfaces generated using the CAD program.

In the method for checking a moving available area of a robot on a moving surface according to the exemplary embodiment of the present invention, triangle meshes are generated for the hull curved surfaces by triangulating each of the hull curved surfaces by using the geometric model 2 for hull curved surfaces generated as described above. FIG. 2B is a diagram illustrating a triangle mesh 4 generated for the hull curved surface by triangulating the geometric model 2 illustrated in FIG. 2A. As stated above, when the triangle mesh is generated for each of the hull curved surfaces, the triangle mesh for each curved surface includes a plurality of triangles in which positional information on edges and vertices and adjacency relations therebetween are known.

In this case, when the hull curved surface is triangulated, if the geometric model of the hull has adjacency information between curved surfaces, the entire ship hull model may be converted into one triangle mesh. In such a case, it is assumed that the distinction between the curved surfaces constituting the hull disappears and only one triangle mesh is formed for the hull.

Meanwhile, when the geometric model of the hull does not have the adjacency information between the adjacent curved surfaces, one triangle mesh is generated for each curved surface, and the adjacent triangle meshes do not share the vertex and the edge.

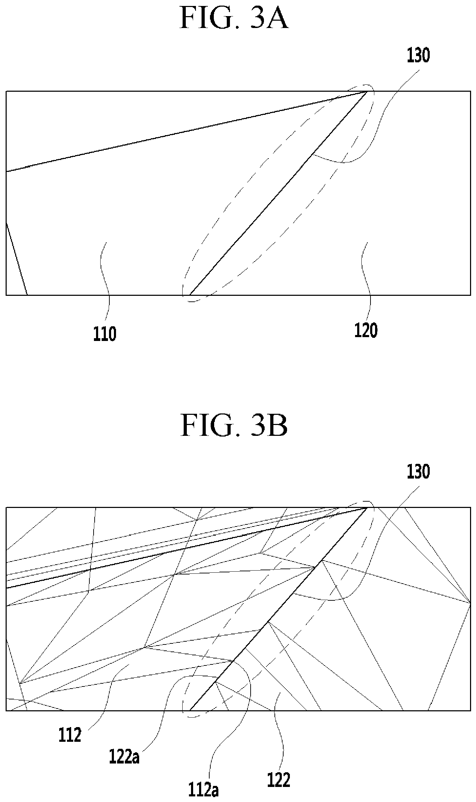

FIG. 3A illustrates a part of the edge of the curved surface formed by the geometric model, and FIG. 3B illustrates a state in which the triangle mesh is generated for each curved surface by triangulating the part of the edge illustrated in FIG. 3A.

FIG. 3A illustrates an edge 130 of the geometric model of the hull. As illustrated in FIG. 3A, even through a left curved surface 110 and a right curved surface 120 meets each other at the edge 130, when the geometric model does not have information about the edge 130, if the triangle meshes are formed using the left curved surface 110 and the right curved surface 120, triangles, which do not share vertices at the edge 130, within the triangle meshes corresponding to the curved surfaces are formed as illustrated in FIG. 3B.

For example, when the adjacency information, that is, information on the edge 130 is shared, a triangle 112 whose vertex 112a is positioned on the edge 130 among the triangles within the triangle mesh formed to correspond to the left curved surface 110 and a triangle 122 whose vertex 122a is positioned on the edge 130 among the triangles within the triangle mesh formed to correspond to the right curved surface have a common vertex, but when the information on the edge 130 is not shared, the triangles are formed to have different vertices as illustrated in FIG. 3B.

In the method for checking a moving available area of a robot on a moving surface according to the exemplary embodiment of the present invention, when the adjacent curved surfaces share the adjacency information of the edge, if the triangle mesh is formed using the geometric model, since one mesh is formed by different curved surfaces from each other, a moving available area of a robot on a moving surface is calculated using relations between triangles within one mesh. Further, when the adjacent curved surfaces do not share the adjacency information of the edge, since the triangle mesh is formed by each curved surface, the moving available area on the moving area is calculated in consideration of relations between the triangles within each of the plurality of triangle meshes and relations between the triangles between the adjacent triangle meshes.

More specifically, according to the exemplary embodiment of the present invention, after the triangle mesh is formed using the geometric model, angles between each of the plurality of triangles positioned within the triangle mesh and triangles adjacent to each triangle are calculated (S103), and the moving available area on the moving surface is primarily checked based on the calculated resultant. (S104)

In this case, the angle between the triangles means an angle formed by a surface formed by one triangle and a surface formed by a triangle adjacent to the one triangle by using the edge or the vertex shared by the adjacent triangles as a reference.

The angle between the triangles may be calculated using normal vectors of one triangle and a triangle adjacent to the one triangle.

The calculation for an angle at which surfaces of the adjacent triangles meet each other at one edge by using the normal vectors of the triangles can be easily performed by a known calculating method, and since the calculating method is easily known to a person of an ordinary skill in the art, the detailed description thereof will not be presented.

On the other hand, after the angles between the adjacent triangles are calculated using the normal vectors formed at centers of the triangles positioned in a three-dimensional space, when an angle between one triangle and any one triangle of triangles adjacent to the one triangle is out of a moving allowable range, the triangle may be defined as a moving unavailable area.

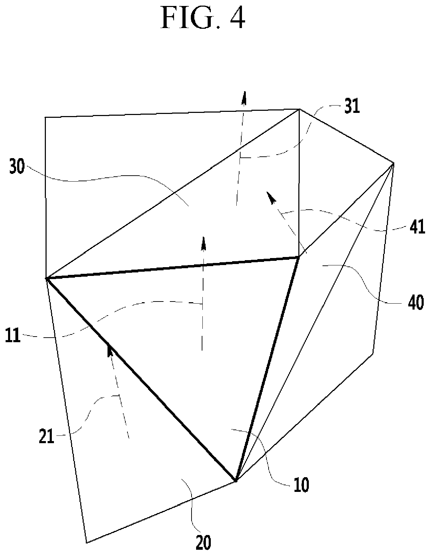

For example, FIG. 4 illustrates a first triangle 10, three second to fourth triangle 20, 30, and 40 adjacent to the first triangle, and normal vectors 11, 21, 31 and 41 of the triangles. In this case, when angles between the first triangle 10 and the second to fourth triangle 20, 30, and 40 are 190 degrees, 185 degrees, and 120 degrees, respectively, if a moving allowable range of a robot is from 135 to 225 degrees, the angle between the first triangle 10 and the fourth triangle 40 is out of the moving allowable range. Accordingly, the first triangle 10 becomes a moving unavailable area of the robot.

Meanwhile, when it is primarily determined whether or not the robot can move as mentioned above, the triangles positioned within the triangle mesh may be distinguished to two types of triangles, that is, a triangle positioned within the mesh and a triangle positioned at a boundary of the mesh.

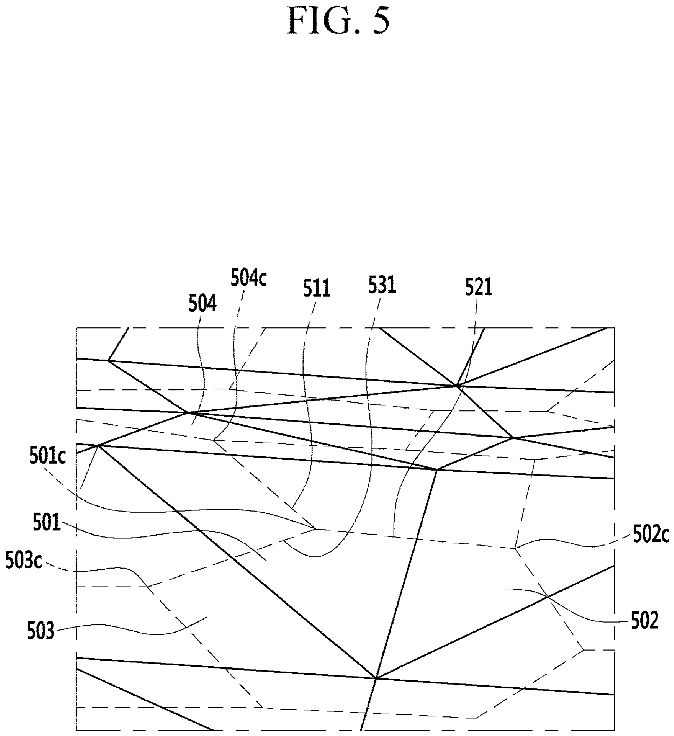

In this case, there are constantly adjacency relations between the triangle positioned within the mesh and three triangles adjacent to the triangle. FIG. 5 illustrates a plurality of triangles 501, 502, 503, and 504 positioned within the mesh.

In this case, dotted lines 511, 521, and 531 within the triangles are virtual lines which connect centers 501c, 502c, 503c, and 504c of the triangles.

In this case, when the centers of the triangles within the triangle mesh and centers of triangles adjacent to each triangle are connected while sharing edges, the centers of the triangles within the triangle mesh become vertices at which three segments meet.

That is, in FIG. 5, the center 501c of the triangle 501becomes a vertex at which segments 511, 521 and 531 connecting the center 501c of the triangle 501 and the centers 502c, 503c and 504c of the three triangles 502, 503 and 504 meet each other.

As described above, the adjacency relations between the triangles within the mesh and the triangles adjacent thereto are calculated in the triangulation procedure for generating the meshes, and adjacency relation information represented in FIG. 5 is stored in the triangle mesh after the triangulation procedure.

Accordingly, when the angles of the triangles are calculated, the adjacent triangles can be immediately found using the adjacency relation information, and the angles between the adjacent triangles can be easily calculated.

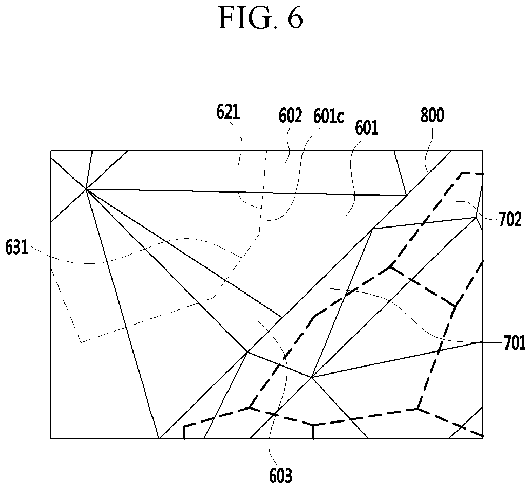

In contrast, referring to FIG. 6, there are adjacency relations between a triangle 601 at the boundary of the triangle mesh and two triangles 602 and 603 within the same triangle mesh. That is, when a center 601c of the triangle 601 positioned at a boundary 800 of the triangle mesh in FIG. 6 and centers of the triangles 602 and 603 within the same triangle mesh are connected to each other, only two segments 621 and 631 exist.

In this case, there may be adjacency relations between the triangle 601 at the boundary 800 of the triangle mesh and several triangles 701 and 702 positioned at a mesh adjacent to the triangle mesh.

However, one mesh does not store adjacency relation information with triangles within a mesh adjacent to the one mesh.

In such a case, a distance between the triangle positioned at the boundary of the triangle mesh and a triangle at a boundary of a triangle mesh adjacent thereto is calculated, and it is determined whether or not two triangles are adjacent to each other on the basis of the calculated resultant.

More specifically, a distance between two triangles may be calculated using positional information of a triangle within one mesh, for example, positional information on vertices and three sides and information on another triangle within a triangle mesh adjacent thereto, for example, positional information on vertices and three sides.

In this case, when a distance between two triangles at any edge is zero (0), it may be calculated that two triangles come in contact with each other at the edge.

As described above, after it is determined whether or not triangles at the boundary of the triangle mesh are triangles adjacent to each other by calculating a distance between the triangles, when the angles between the triangles are out of the moving allowable range of the robot, the triangles are defined as the moving unavailable area.

In this manner, by determining whether or not triangles within all triangle meshes are the moving available area or the moving unavailable area, the moving available areas of the robot are primarily calculated.

After the moving available areas of the robot are primarily calculated, an inspection whether or not the robot intersects with the moving surface is performed in order to find a moving available area in consideration of a size of the robot. (S105)

More specifically, after the robot capable of moving on the moving surface is simplified in, for example, a box shape having a width, length and height of 1 m x 1 m x 1 m, it is inspected whether or not there is a position where the box-shaped robot intersects with the moving surface while moving the box-shaped robot on the triangle that is primarily calculated as the moving available area of the robot on the hull curved surfaces represented as the triangle mesh.

In this case, when the robot intersects with the moving surface, it may be determined that the robot collides with the ship hull surface when the robot moves on the moving surface. Accordingly, as a result of inspecting whether the robot intersects with the moving surface, when it is determined that the robot intersects with the moving surface, a triangle at which the robot is positioned is excluded from the moving available area.

According to the exemplary embodiment of the present invention, by inspecting an area where the robot intersects with the moving surface as mentioned above, the moving available area of the robot is secondarily checked (S106).

When the moving available area of the robot is secondarily calculated as stated above, the moving available area of the robot on the moving surface is finally checked.

In the method for checking a moving available area of a robot on a moving surface according to the exemplary embodiment of the present invention, after the triangle mesh is formed using the geometric model of the moving surface, the moving available areas of the robot are primarily checked by calculating angle relations between the triangles within the triangle mesh. Thereafter, among the calculated moving available areas of the robot, an area where the robot does not intersect with the moving surface by inspecting whether or not the robot inspects with the moving surface is finally determined as a moving available area. In this way, it is possible to accurately check the moving available area of the robot on the moving surface.

In the method for checking a moving available area of a robot on a moving surface according to the exemplary embodiment of the present invention, although it has been described that the robot moves on the hull surface of the ship, the moving surface on which the robot moves is not limited thereto. A moving available area can be checked for all surfaces on which the robot can move by using the method for checking a moving available area of a robot on a moving surface according to the exemplary embodiment of the present invention.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

According to an exemplary embodiment of the present invention, it is possible to easily check a moving available area of a robot on a moving surface.

## Claims

1. A method for checking a moving available area of a robot on a moving surface in order to allow the robot to autonomously move on the moving surface of a curved surface, the method comprising:
a) generating (S101) a geometric model (2) of the moving surface divided into a plurality of curved surfaces (110, 120);
b) dividing (S102) the plurality of curved surfaces into a plurality of triangles (10, 20, 30, 40) by using the geometric model;
c) calculating (S103) angles between the plurality of triangles and triangles adjacent to the plurality of triangles; and
d) determining whether or not the angles are within a predetermined range.

2. The method of claim 1, wherein:
in step b), each of the plurality of triangles (10, 20, 30, 40) is substantially a flat surface.

3. The method of claim 1, wherein:
in step b), the one curved surface is divided into a plurality of triangles (10, 20, 30, 40) such that triangles adjacent to each other within the one curved surface share an edge (130) and a vertex (112a, 122a).

4. The method of claim 3, wherein:
in step c), angles between the adjacent triangles (10, 20, 30, 40) that share the edge or the vertex are calculated.

5. The method of claim 4, wherein:
in step c), when angles between triangles (10, 20, 30, 40), which are positioned at a boundary between two curved surfaces adjacent to each other and are respectively positioned on the two adjacent curved surfaces, are calculated, angles between triangles (10, 20, 30, 40) whose edge and edge, edge and vertex, or vertex and vertex meet each other are calculated.

6. The method of claim 1, further comprising:
after step d),
e) checking primary moving available areas (S104) by defining the triangles (10, 20, 30, 40) as the moving available areas the when the angles are within the predetermined range.

7. The method of claim 1, wherein:
in step c), the angles are calculated using angles between normal vectors (11, 21, 31, 41) of the adjacent triangles.

8. The method of claim 6, further comprising:
after step e),
checking a secondary moving available area (S106) by setting the robot to have a predetermined size, moving the robot in the moving available areas, and then by defining an area where the robot does not intersect with the moving surface as a moving available area.

9. A robot that stores a program for executing the method for checking a moving available area of a robot on a moving surface of any one of claims 1 to 8 or moves on a moving surface by being controlled by an external device that stores the program.

10. A computer-readable recording medium that stores a program for executing the method for checking a moving available area of a robot on a moving surface of any one of claims 1 to 8.

## Patentansprüche

1. Verfahren zum Überprüfen eines beweglichen verfügbaren Bereichs eines Roboters auf einer sich bewegenden Oberfläche, um dem Roboter autonome Bewegungen auf der sich bewegenden Oberfläche einer gekrümmten Oberfläche zu ermöglichen, wobei das Verfahren umfasst:
a) Erstellen (S101) eines geometrischen Modells (2) der sich bewegenden Oberfläche, das in eine Mehrzahl gekrümmter Oberflächen (110, 120) geteilt ist;
b) Aufteilen (S102) der Mehrzahl gekrümmter Oberflächen in eine Mehrzahl Dreiecke (10, 20, 30, 40) unter Heranziehung des geometrischen Modells;
c) Berechnen (S103) von Winkeln zwischen der Mehrzahl Dreiecke und Dreiecken, die an die Mehrzahl Dreiecke grenzen; und
d) Ermitteln, ob sich die Winkel innerhalb eines vorgegebenen Bereichs liegen.

2. Verfahren nach Anspruch 1, wobei:
im Schritt b) jedes der Mehrzahl Dreiecke (10, 20, 30, 40) im Wesentlichen eine flache Oberfläche ist.

3. Verfahren nach Anspruch 1, wobei:
im Schritt b) die eine gekrümmte Oberfläche in eine Mehrzahl Dreiecke (10, 20, 30, 40) geteilt ist, so dass sich die benachbarten Dreiecke in der einen gekrümmten Oberfläche eine Seite (130) und einen Scheitelpunkt (112a, 122a) teilen.

4. Verfahren nach Anspruch 3, wobei:
im Schritt c) Winkel zwischen den benachbarten Dreiecken (10, 20, 30, 40), die sich die Seite oder den Scheitelpunkt teilen, berechnet werden.

5. Verfahren nach Anspruch 4, wobei:
im Schritt c), wenn Winkel zwischen Dreiecken (10, 20, 30, 40), die an einer Grenze zwischen zwei benachbarten gekrümmten Oberflächen positioniert sind und jeweils auf den zwei benachbarten gekrümmten Oberflächen positioniert sind, berechnet werden, die Winkel zwischen den Dreiecken (10, 20, 30, 40), deren Seite und Seite, Seite und Scheitelpunkt oder Scheitelpunkt und Scheitelpunkt zusammentreffen, berechnet werden.

6. Verfahren nach Anspruch 1, ferner umfassend:
im Anschluss an den Schritt d):
e) Überprüfen sich bewegender primärer verfügbarer Bereiche (S104), indem die Dreiecke (10, 20, 30, 40) als sich bewegende verfügbare Bereiche definiert werden, wenn sich die Winkel im vorgegebenen Bereich befinden.

7. Verfahren nach Anspruch 1, wobei:
im Schritt c) die Winkel unter Verwendung von Winkeln zwischen normalen Vektoren (11, 21, 31, 41) der benachbarten Dreiecke berechnet werden.

8. Verfahren nach Anspruch 6, ferner umfassend: im Schritt e)
Überprüfen eines sich bewegenden sekundären verfügbaren Bereichs (S106), indem der Roboter auf eine vorgegebene Größe eingestellt wird, der Roboter innerhalb der sich bewegenden verfügbaren Bereiche bewegt und dann ein Bereich als sich bewegender verfügbarer Bereich definiert wird, in dem sich der Roboter mit der sich bewegenden Oberfläche nicht kreuzt.

9. Roboter, in dem ein Programm zur Ausführung des Verfahrens zum Überprüfen eines sich bewegenden verfügbaren Bereichs eines Roboters auf einer sich bewegenden Oberfläche nach einem der Ansprüche 1 - 8 dadurch gespeichert ist, dass dieser durch ein externes Gerät gesteuert wird, in dem das Programm gespeichert ist.

10. Computerlesbarer Datenträger, der ein Programm zum Ausführen des Verfahrens zum Überprüfen eines sich bewegenden verfügbaren Bereichs eines Roboters auf einer sich bewegenden Oberfläche nach einem der Ansprüche 1 - 8 speichert.

## Revendications

1. Procédé de vérification d'une zone disponible de déplacement d'un robot sur une surface de déplacement afin de permettre au robot de se déplacer de manière autonome sur la surface de déplacement d'une surface incurvée, le procédé comprenant :
a) la génération (S101) d'un modèle géométrique (2) de la surface de déplacement divisée en une pluralité de surfaces incurvées (110, 120) ;
b) la division (S102) de la pluralité de surfaces incurvées en une pluralité de triangles (10, 20, 30, 40) en utilisant le modèle géométrique ;
c) le calcul (S103) d'angles entre la pluralité de triangles et de triangles adjacents à la pluralité de triangles ; et
d) la détermination du fait que les angles se trouvent ou pas à l'intérieur d'une plage prédéterminée.

2. Procédé selon la revendication 1, dans lequel :
à l'étape b), chacun de la pluralité de triangles (10, 20, 30, 40) est sensiblement une surface plane.

3. Procédé selon la revendication 1, dans lequel :
à l'étape b), la seule surface incurvée est divisée en une pluralité de triangles (10, 20, 30, 40) de telle sorte que les triangles adjacents les uns aux autres à l'intérieur de la seule surface incurvée partagent une arête (130) et un sommet (112a, 122a).

4. Procédé selon la revendication 3, dans lequel :
à l'étape c), les angles entre les triangles adjacents (10, 20, 30, 40) qui partagent l'arête ou le sommet sont calculés.

5. Procédé selon la revendication 4, dans lequel :
à l'étape c), lorsque les angles entre les triangles (10, 20, 30, 40), qui sont positionnés sur une limite entre deux surfaces incurvées adjacentes l'une à l'autre et sont respectivement positionnés sur les deux surfaces incurvées adjacentes, sont calculés, les angles entre les triangles (10, 20, 30, 40) dont l'arête et l'arête, l'arête et le sommet, ou le sommet et le sommet se rencontrent les uns les autres sont calculés.

6. Procédé selon la revendication 1, comprenant en outre :
après l'étape d),
e) la vérification des zones disponibles de déplacement principales (S104) en définissant les triangles (10, 20, 30, 40) comme les zones disponibles de déplacement lorsque les angles se trouvent dans la plage prédéterminée.

7. Procédé selon la revendication 1, dans lequel
à l'étape c), les angles sont calculés en utilisant les angles entre les vecteurs normaux (11, 21, 31, 41) des triangles adjacents.

8. Procédé selon la revendication 6, comprenant en outre :
après l'étape e),
la vérification d'une zone disponible de déplacement secondaire (S106) en réglant le robot à une taille prédéterminée, en déplaçant le robot dans les zones disponibles de déplacement, et puis en définissant une zone où le robot ne croise pas la surface de déplacement comme une zone disponible de déplacement.

9. Robot qui stocke un programme pour exécuter le procédé de vérification d'une zone disponible de déplacement d'un robot sur une surface de déplacement selon l'une quelconque des revendications 1 à 8 ou se déplace sur une surface de déplacement en étant contrôlé par un dispositif externe qui stocke le programme.

10. Support d'enregistrement lisible par ordinateur qui stocke un programme pour exécuter le procédé de vérification d'une zone disponible de déplacement d'un robot sur une surface de déplacement selon l'une quelconque des revendications 1 à 8.
